# EUROPEAN PATENT APPLICATION

(11) **EP 2 045 176 A1**
(43) Date of publication of application: **08.04.2009**
(21) Application number: 08165477.4
(22) Date of filing: 30.09.2008
(51) Int. Cl.: B62D 55/20, B62D 55/205, B62D 55/21

(54) **Track shoe assembly for medium tracked vehicle**

(30) Priority: 04.10.2007 TH 503307
(71) Applicant: Chaiseri Metal & Rubber Co., Ltd., 12140 Pathumtanee (TH)
(72) Inventor: Kitti, Kunhiran, 12140, Pathumtanee (TH)
(74) Representative: Bentz, Jean-Paul

(57) **Abstract**

The present invention related to the track shoe assembly (2) for tracked vehicle (1). More specifically, the present invention related to the track shoe assembly for medium tracked vehicle. The track shoe assembly of the present invention is a double pin (52), having rubber bushing type (152). The rubber pad (40) is a replaceable, non-directional type having large contact surface between the ground and the rubber pad, therefore, the ground pressure is reduced approximately 40 %. The track shoe assembly (2) according to the present invention is also durable and lighter than the conventional track shoe assembly. The weight is reduced by using rubber in place of a single solid steel. Thus, the service life is expanded and fuel consumption is reduced. In addition, only the failure part can be replaced instead of replacing the entire track shoe assembly (2). Therefore, reduces maintenance cost and time.

## Description

### FIELD OF THE INVENTION

This application related to track shoe assembly for medium tracked vehicle.

### BACKGROUND OF THE INVENTION

Military weapons such as artillery and projectiles having been continuously developed to increase their destructive power. On the contrary, armour for vehicle is also being continuously developed to increase their resistance to the destructive power of such weapons. When both developed weapon and armour are installed on a tracked vehicle, the increase of the overall weight of the vehicle is, hence, inevitable. Such increase in the vehicle weight demands a higher power engine and an upgraded gear box that can transmit higher horse powers. This demand further increases the overall weight of the original vehicle while the ground contact surface area of the track which distributes the overall weight of the vehicle to the ground is still constant. The outcome is that the ground pressure (the force that acts on the road surface per unit area) highly increases. Therefore, there is a need for a track shoe assembly developed to have high efficiency for such highly increased work load.

The existing track shoe for medium tracked vehicle, e.g. the track shoe of French medium armour tracked vehicle model AMX30, is manufactured from a single piece of molding cast steel having high specific gravity (sp. gr. = 7.85). When any parts of the shoe wear out/break the whole piece of the cast steel track shoe has to be replaced. This is due to the following example problems.

The first problem is the said track shoe assembly is a single pin, having no rubber bushing type track shoe assembly. This type of track shoe assembly generates noise and vibration due to the friction between the pin hole of the track shoe (which is made from cast iron) and the pin that connect the adjacent track shoe assembly together. Such friction causes wear out until the circular pin hole of the track shoe becomes an oval shape and the entire track shoe assembly has to be replaced.

The second problem is the sprocket wheel drives only at the window of the track shoe body of the said track shoe assembly. When the window of the track shoe wear out up to a point, the entire track shoe assembly has to be replaced.

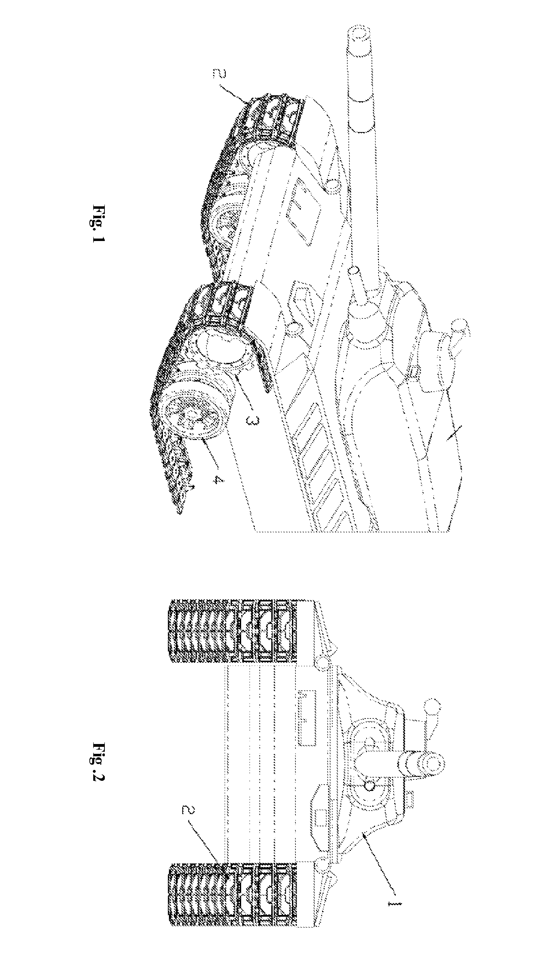

The track shoe for medium track vehicle, such as the track vehicle shown in figure 1, is the single guide, single pin having no rubber bushing, with directional rubber pad type track shoe assembly made from cast steel. In addition, the shapes of the track shoe and the rubber pad is asymmetry. These asymmetry shapes leave moving direction footprint of the vehicle when the vehicle run on the road/terrain, thus makes the tracking of the vehicle easily and not suitable for strategic deployment in warfare scenarios. In addition, the small contact surface area between the rubber pads and the road surface causes instability of the moving of the vehicle as well as too much force acts on the road surface which is not suitable for the present developed tracked vehicle.

The conventional track shoe assembly is manufactured by casting steel in a mold. If one needs to manufacture by forging, a large forging machine having force more than 4,000 tons is required. The requirement of such machine means high investment.

The present invention is provided to solve all of the above mentioned problems of the prior art. The track shoe assembly of the present invention is a double pin with rubber bushing type. The track shoe assembly of the present invention also has an end connector that connects the adjacent track shoes together. Such connector design provides a stronger connection between track shoe and easier to maintenance connector. When failure occurs at any part of the track shoe assembly, only that failure part needs to be replaced rather than the entire track shoe assembly. This leads to lower maintenance cost and less maintenance time.

The present invention relates to the track shoe assembly of the medium tracked vehicle. More specifically, the present invention relates to a double-pin with rubber bushing type track shoe assembly of the medium tracked vehicle. The track shoe assembly of the present invention also has an end connector that connects the adjacent track shoes together. The rubber pad of the present track shoe assembly is a non-directional type suitable for strategic deployment and can be used in all terrain.

An objective of the present invention is to provide a track shoe assembly for medium track vehicle having improved mobility, reduced noise, vibration, and fuel consumption. Such improvements can be achieved by replacing steel (sp. gr. 7.85) with rubber (sp. gr 1.14) which is lighter in several non-major components. Steel is still needed in major components which require strength or to sustain the weight of the tracked vehicle. The use of rubber significantly decreases the overall weigh of the tracked vehicle due to the specific gravity of rubber is 7 times lower than the specific gravity of steel. The reduced weight reduces the load of the engine which results in less fuel consumption.

The track shoe assembly of the present invention is designed to be able to be partially manufactured part by part. Thus, a large forging machine is no longer required , only one having 1,200 tons forging force is enough. The manufacturing process has low investment and electricity consumption is greatly reduced during manufacture. In addition, when any part of the assembly wear out, only that part is replaced rather than all the track shoe assembly. For example, the present track shoe assembly is connected by using end connectors. The sprocket wheel drives the track at these end connectors. When an end connector wear out, only the wore out end connector is replaced rather than the entire set of the track shoe assembly. In a battle field, when failures and/or damages occur at any part of the assembly, only the failure and/or damage parts needed to be replaced. This means lower maintenance cost and less maintenance time consumption which is suitable for battle field operation.

The track shoe assembly of the present invention is a double-pin, having rubber bushing type. This design can reduce noise and vibration cause from the friction between the sleeves, the track shoe body and the pins that joins each track shoe assembly altogether.

The road surface side of the rubber pad of the present track shoe assembly has a symmetrical, non-directional shape. When the vehicle moves forward or backward, therefore, the track shoe leaves the identical foot-prints on the ground surface causing difficulty in tracing the movement of the tracked vehicle. In addition, due to the rubber pad is a renewable rubber pad type, there is no need to stock a large quantity of the entire set of the track shoe assembly. In the warfare scenarios only the rubber pad, the consuming part, has to be stocked. Since the road surface side of the rubber pad of the present track shoe assembly has a larger surface area than the surface area of the conventional track shoe assembly, the ground pressure acting on the road surface is reduced causing higher stability during the movement of the tracked vehicle. The performance on a concrete and/or an asphalt roads is improved and also causes less damage to the road surface

### BRIEF DESCRIPTION OF THE DRAWINGS

Figure 1 shows a perspective view of a medium tracked vehicle using a conventional track shoe assembly.
Figure 2 is the front view of the medium tracked vehicle using the conventional track shoe assembly showed in figure 1.
Figure 3 shows another perspective view of the conventional track shoe assembly with a sprocket wheel and a road wheel.
Figure 4 is the front view of the conventional track shoe assembly assembled on a sprocket wheel.
Figure 5 is another perspective view of the conventional track shoe assembly. This figure shows the road wheel side of the track shoe assembly.
Figure 6 is another perspective view of the conventional track shoe assembly. This figure shows the road surface side of the track shoe assembly.
Figure 7 is an exploded perspective view of the conventional track shoe assembly. This figure shows the road surface side of the track shoe assembly.
Figure 8 is another exploded perspective view of the conventional track shoe assembly. This figure shows the road wheel side of the track shoe assembly.
Figure 9 is the perspective view of a medium tracked shoe vehicle using the track shoe assembly of the present invention.
Figure 10 is the front view of the medium tracked shoe vehicle using the track shoe assembly of the present invention.
Figure 11 is another perspective view of the track shoe assembly according to the present invention with a sprocket wheel and a road wheel.
Figure 12 is the front view of the track shoe assembly according to the present invention assembled on a sprocket wheel.
Figure 13 is another perspective view of the track shoe assembly according to the present invention. This figure shows the road surface side of the track shoe assembly with the rubber pad according to the present invention.
Figure 14 is another perspective view of the track shoe assembly according to the present invention. This figure shows the road wheel side of the track shoe assembly.
Figure 15 is an exploded perspective view of the track shoe assembly according to the present invention. This figure shows the road surface side of the track shoe assembly.
Figure 16 is another exploded perspective view of the track shoe assembly according to the present invention. This figure shows the road wheel side of the track shoe assembly.
Figure 17 shows a perspective view of the track shoe body according to the present invention. This figure shows the road wheel side of the track shoe assembly.
Figure 18 is another perspective view of the track shoe body according to the present invention. This figure shows the rubber pad side of the track shoe assembly.
Figure 19 is the front view of the track shoe body according to the present invention.
Figure 20 is the top view of the track shoe body according to the present invention. This figure shows the road wheel side of the track shoe assembly.
Figure 21 is the bottom view of the track shoe assembly according to the present invention. This figure shows the rubber pad installation surface of the track shoe assembly.
Figure 22 shows the side view of the track shoe body according to the present invention.
Figure 23 shows a perspective view of the track shoe body according to the present invention before rubberization. This figure shows the road wheel side.
Figure 24 shows another perspective view of the track shoe body according to the present invention before rubberization. This figure shows the rubber pad side.
Figure 25 is the front view of the track shoe body according to the present invention before rubberization.
Figure 26 is the top view of the track shoe body according to the present invention before rubberization. This figure shows the road wheel side.
Figure 27 is the bottom view of the track shoe body according to the present invention before rubberization. This figure shows the rubber pad installation side.
Figure 28 is the side view of the track shoe body according to the present invention before rubberization.
Figure 29 is an exploded perspective view of the track shoe body according to the present invention before rubberization. This figure shows the road wheel side.
Figure 30 is another exploded perspective view of the track shoe body according to the present invention before rubberization. This figure shows the rubber pad installation side.
Figure 31 shows a perspective view on the road wheel side of the end member having rubber pad supporting steel grouser according to the present invention.
Figure 32 shows another perspective view on the rubber pad installation side of the end member having rubber pad supporting steel grouser according to the present invention.
Figure 33 is the front view of the end member having steel grouser according to the present invention.
Figure 34 is the top view of the end member having steel grouser according to the present invention.
Figure 35 is the bottom view of the end member having steel grouser according to the present invention.
Figure 36 is the side view of the end member having steel grouser according to the present invention.
Figure 37 is a sectional view taken along line 37-37 of the end member having steel grouser according to the present invention.
Figure 38 is a sectional view taken along line 38-38 of the end member having steel grouser according to the present invention shown in figure 34.
Figure 39 is a perspective view on the track shoe installation side of the rubber pad for the track shoe assembly according to the present invention.
Figure 40 is a perspective view on the road surface side of the rubber pad for the track shoe assembly according to the present invention.
Figure 41 is the front view of the rubber pad for the track shoe assembly according to the present invention.
Figure 42 is the top view of the rubber pad for the track shoe assembly according to the present invention.
Figure 43 is the bottom view of the rubber pad for track shoe assembly according to the present invention.
Figure 44 is the side view of the rubber pad for the track shoe assembly according to the present invention.
Figure 45 is a perspective view of the formed steel plate according to the present invention before rubberization. This figure shows the side confronts with the track shoe assembly
Figure 46 is another perspective view of the formed steel plate according to the present invention before rubberization. This figure shows the rubberized side.
Figure 47 is the front view of the formed steel plate according to the present invention before rubberization.
Figure 48 is the top view of the formed steel plate according to the present invention before rubberization.
Figure 49 is the bottom view of the formed steel plate according to the present invention before rubberization.
Figure 50 is the side view of the formed steel plate according to the present invention before rubberization.
Figure 51 is a sectional view taken along line 51-51 of the formed steel plate according to the present invention.
Figure 52 is a bottom view showing the inner cross section of the formed steel plate according to the present invention.
Figure 53 is a sectional view taken along line 53-53 of the formed steel plate according to the present invention.
Figure 54 is a sectional view taken along line 54-54 of the formed steel plate according to the present invention.
Figure 55 is a sectional view taken along line 55-55 of the formed steel plate according to the present invention.
Figure 56 is a perspective view of the end connector according to the present invention on the right hand side of the road surface side.
Figure 57 is a perspective view of the end connector according to the present invention on the right hand side of the sprocket wheel side.
Figure 58 is the front view of the end connector according to the present invention on the right hand side.
Figure 59 is the bottom view of the end connector according to the present invention on the right hand side.
Figure 60 is the top view of the end connector according to the present invention on the right hand side.
Figure 61 is the side view of the end connector according to the present invention on the right hand side.
Figure 62 is a sectional view taken along line 62-62 of the end connector according to the present invention on the right hand side.
Figure 63 is a sectional view taken along line 63-63 of the end connector according to the present invention on the right hand side.
Figure 64 is a perspective view of the end connector according to the present invention on the left hand side of the road surface side.
Figure 65 a perspective view of the end connector according to the present invention on the left hand side of the sprocket wheel side.
Figure 66 is the front view of the end connector according to the present invention on the left hand side.
Figure 67 is the bottom view of the end connector according to the present invention on the left hand side.
Figure 68 is the top view of the end connector according to the present invention on the left hand side.
Figure 69 is the side view of the end connector according to the present invention on the left hand side.
Figure 70 is a sectional view taken along line 70-70 of the end connector according to the present invention on the left hand side.
Figure 71 is a sectional view taken along line 71-71 of the end connector according to the present invention on the left hand side.
Figure 72 is the perspective view of the extension guided chassis according to the present invention on the rubber pad installation side.
Figure 73 is the perspective view of the extension guided chassis according to the present invention on the road wheel side.
Figure 74 is the front view of the extension guided chassis according to the present invention.
Figure 75 is the bottom view of the extension guided chassis according to the present invention.
Figure 76 is the top view of the extension guided chassis according to the present invention.
Figure 77 is the side view of the extension guided chassis according to the present invention.
Figure 78 is a sectional view taken along line 78-78 of the extension guided chassis according to the present invention.
Figure 79 is a sectional view taken along line 79-79 of the extension guided chassis according to the present invention.

### DETAIL DESCRIPTION OF THE PREFERRED EMBODIMENTS

With reference to figures 1 and 2, the medium tracked vehicle 1 using the conventional track shoe assembly 2. The suspension system of the medium tracked vehicle comprises of the conventional track shoe assembly 2, a sprocket wheel 3 and a road wheel 4.

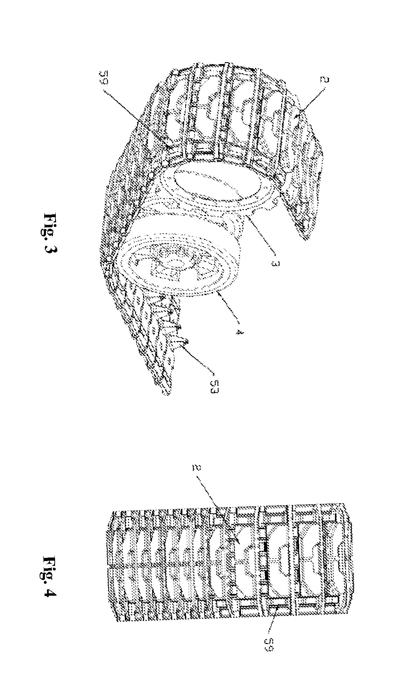

Figures 3 and 4 show the conventional track shoe assembly 2 wound around the said sprocket wheel 3 and the said road wheel 4. The movement of the track begins from the transmission of power from the engine to the sprocket wheel 3. The sprocket wheel 3 then drives the track shoe assembly 2 at the track window.

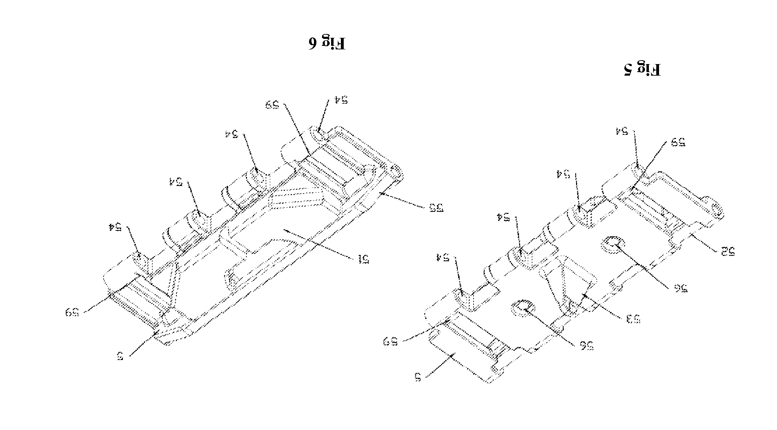

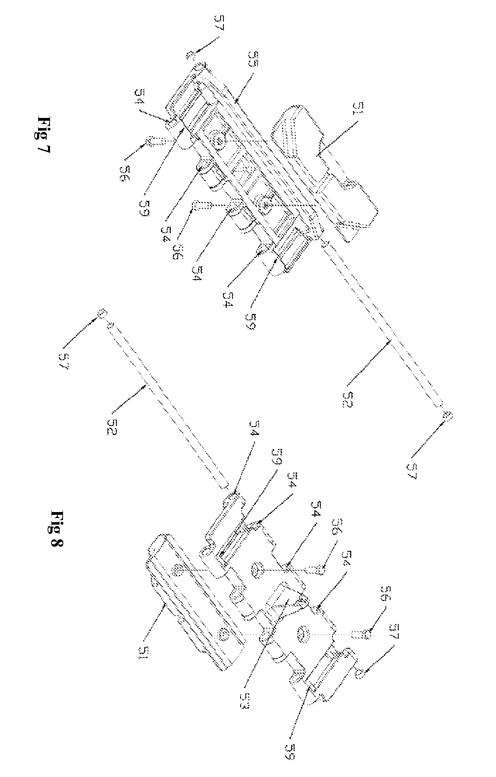

Figures 5-8 illustrate a conventional track shoe assembly. This type of track shoe assembly comprises of track shoe body 5, rubber pad 51, and pin 52. The pin 52 is inserted through the hole 54 of the track shoe body 5 and the hole 54 of the adjacent track shoe body 5. Two fix rings 57 are installed at both ends of the pin 52. The pin 52 acts as a connector that joins two adjacent track shoe bodies together. The rubber pad 51 is fixed to the track shoe body 5 by two fixing screws 56.

The track shoe body 5 comprises of a track guide 53, two track holes 59, and grouser 55. The track guide 53 supports the road wheel and is the part that rubs against the road wheel. The track hole 59 is the part that the teeth of the sprocket wheel project through and is also the part that always rubs against the teeth of the sprocket wheel. The function of the grouser 55 is to maintain the rubber pad 51 to be in the socket of the track shoe body 5.

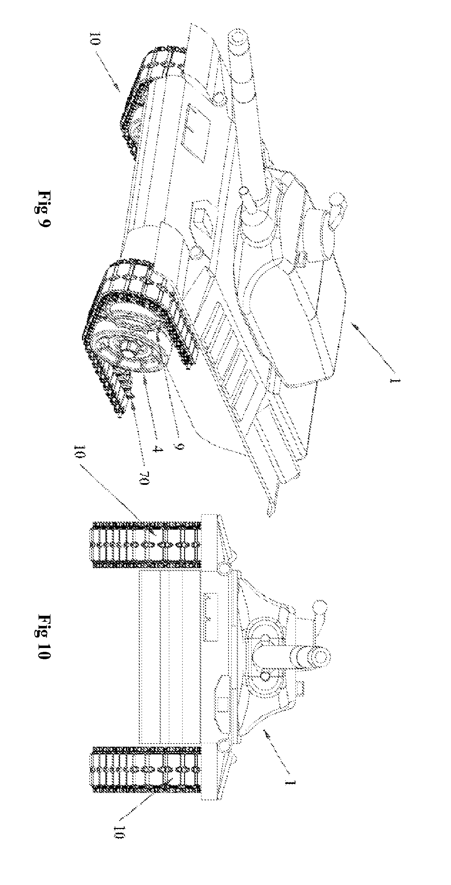

Figures 9-10 show a medium tracked vehicle 1 employing the track shoe assembly 10 according to the present invention. The suspension system of the medium tracked vehicles 1 comprises of the track shoe assembly 10 according to the present invention, a sprocket wheel 9, and road wheel 4. The road wheel 4 presses on top of the track shoe assembly.

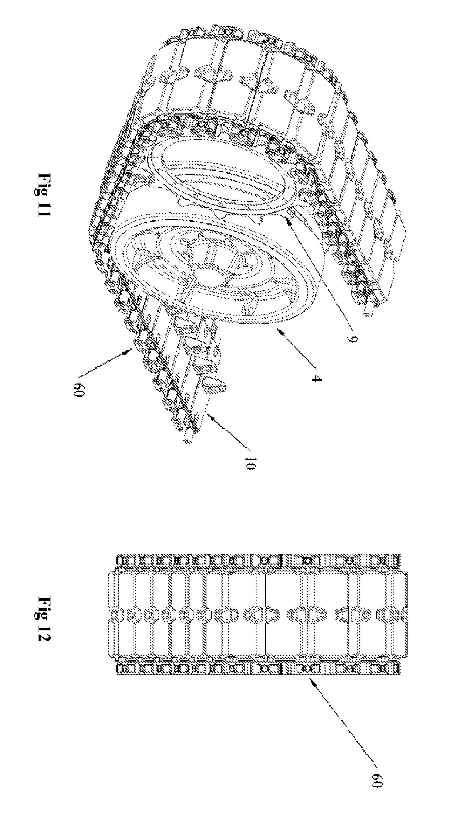

Figures 11-12 show the track shoe assembly 10 according to the present invention, a sprocket wheel 9, and road wheel 4. The operation of the track begins from the transmission of power from the engine to the sprocket wheel 9. Then the sprocket wheel 9 drives the track shoe assembly 10 at the end connector 60.

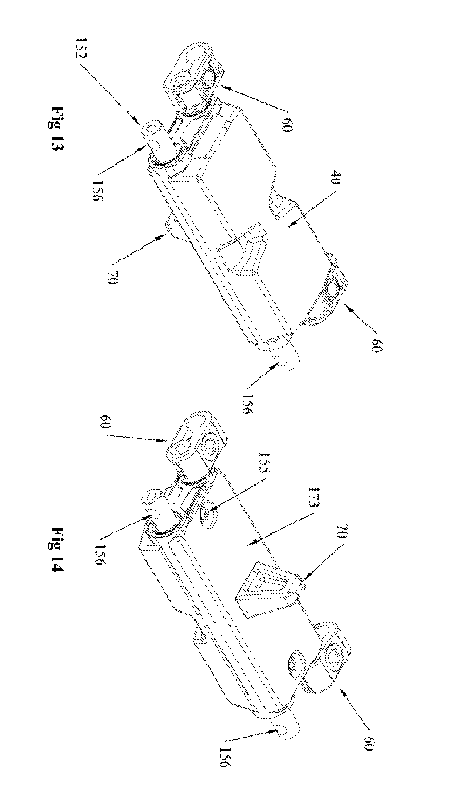

Figures 13-14 show a complete set of a track shoe assembly according to the present invention. This assembly is ready to install the end connector 60 to connect with the pin 152 of the adjacent track shoe assembly to obtain the track shoe assembly 10 shown in figure 11. The part that touches the ground is the rubber pad 40 and the part that is pressed by the road wheel is the surface 173 of the track shoe assembly.

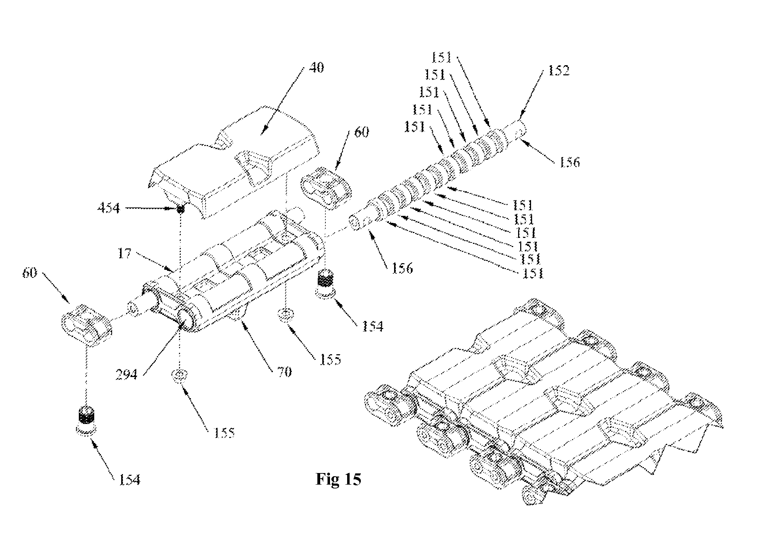

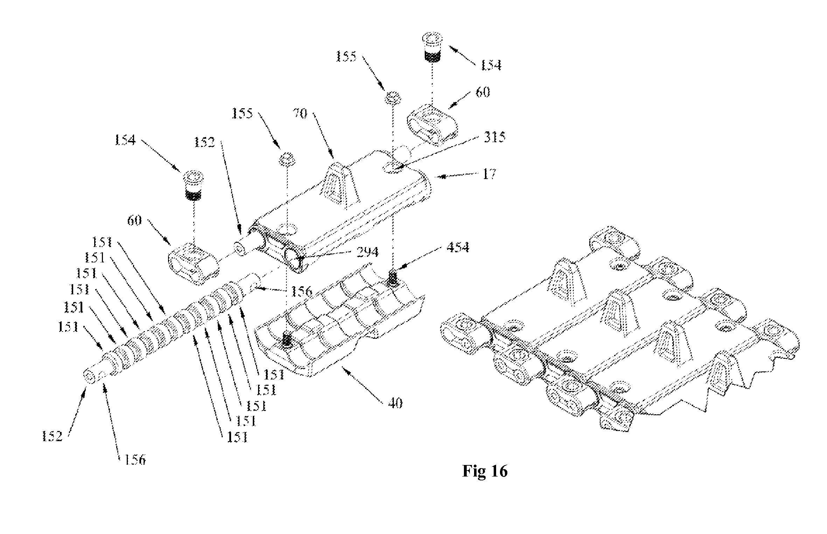

Figures 15-16 show exploded perspective views of the track shoe assembly according to the present invention. The track shoe assembly according to this embodiment is assembled by inserting the pin 152 through the hole 294 of the track shoe body 17. The inside diameter of the hole 294 is slightly smaller than the outside diameter of the rubber bushing 151 in order to fit and fix the pin 152 inside the hole 294, thus attenuating the vibration generates from the movement of the track. Both ends of the pin 152 are installed with end connectors 60 and fixed in place with screw 154 that is inserted through the semicircular holes 156 provided at both ends of the pin 152. The screw 154 prevents the end connector 60 from slipping off the pin 152. The rubber pad 40 is fixed to the track shoe body 17 by inserting bolt 454 through the hole 315 and fixed with nut 155.

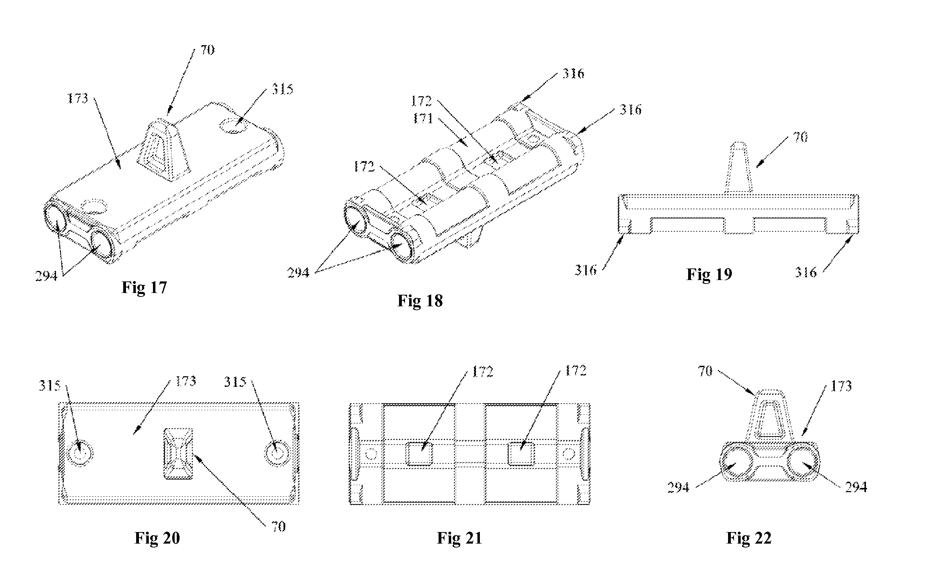

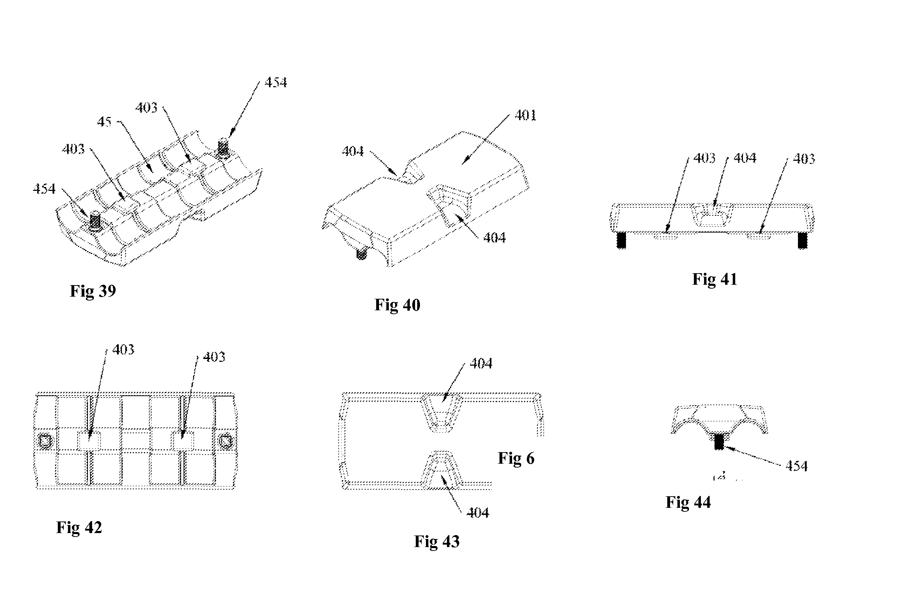

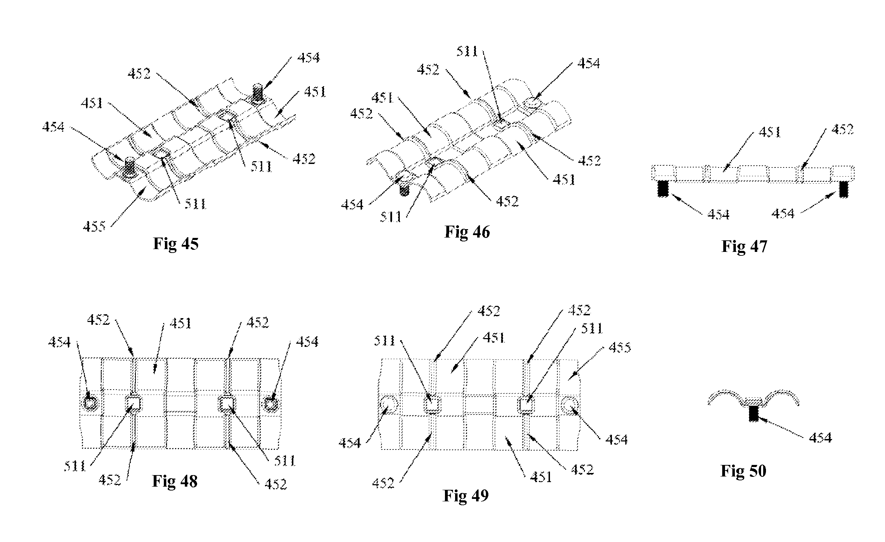

Figures 17-22 show the track shoe body of the present invention 17 after being rubberized. The track shoe assembly on the road wheel side comprises of a track guide 70. The central region of the side wall of the track guide 70 has a recess to reduce the friction occurs between the guide and road wheel and also reduces the engine load. The rubber pad 173, which acts as a road wheel supporter, has two through holes 315 on both left and right sides. The through holes 315 are provided to allow the fixing screws of the rubber pad 40 to pass through and fixed with bolt 155. The ground contact surface of the track shoe assembly has four curve walls 316 at each corner of the track shoe assembly to limit the fixing space of the rubber pad. The curve 171 is provided for supporting a formed steel plate (figure 50) in order to fixed rubber pad (figure 39). The track shoe body has two through holes 294 along the length of the track shoe body 17. These two through holes are provided for the insertion of the pins 152 with the rubber bushings 151. Rubber sockets 172 are provided to accommodate square rubber projections 403 of the rubber pad.

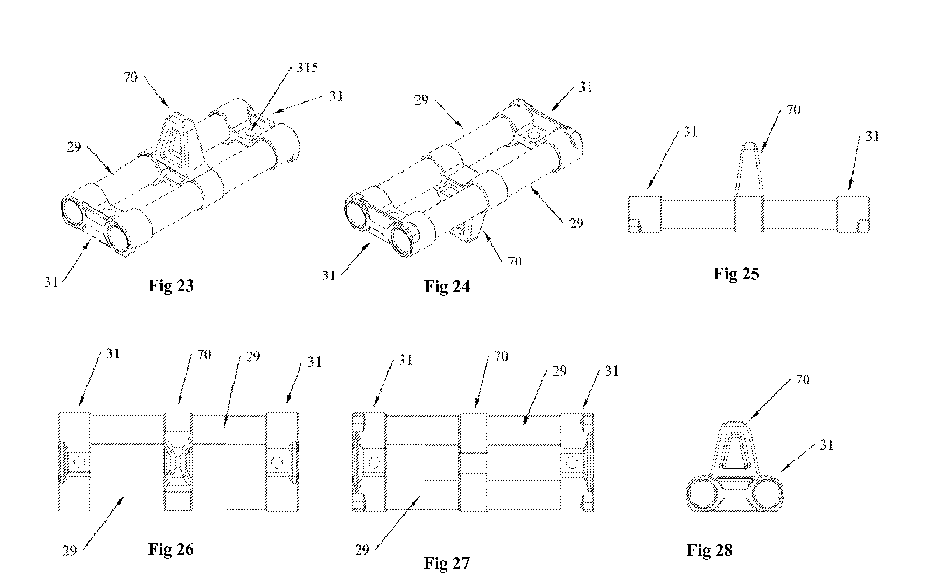

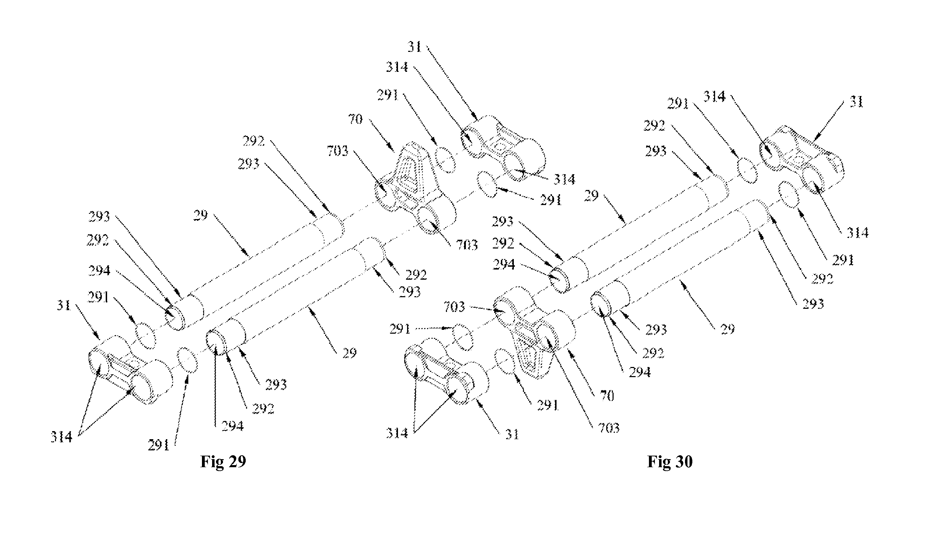

Figures 23 to 30 show the track shoe body 17 and exploded perspective views before rubberization. The track shoe body comprises of two steel tubes 29, extension guided chassis 70, the end members having steel frame 31, and copper rings 291. The extension guide chassis 70 is put on the center of the steel tubes 29. Then the copper rings 291 are put into the hole 703. Then the end members having steel frame 31 are placed at the end of the steel tubes 293 via the holes 314 at both ends of the steel tubes 29. Then the end of the steel tube 292 are expanded and brazed with copper ring 291 to fix the steel tubes to the extension guided chassis and end members.

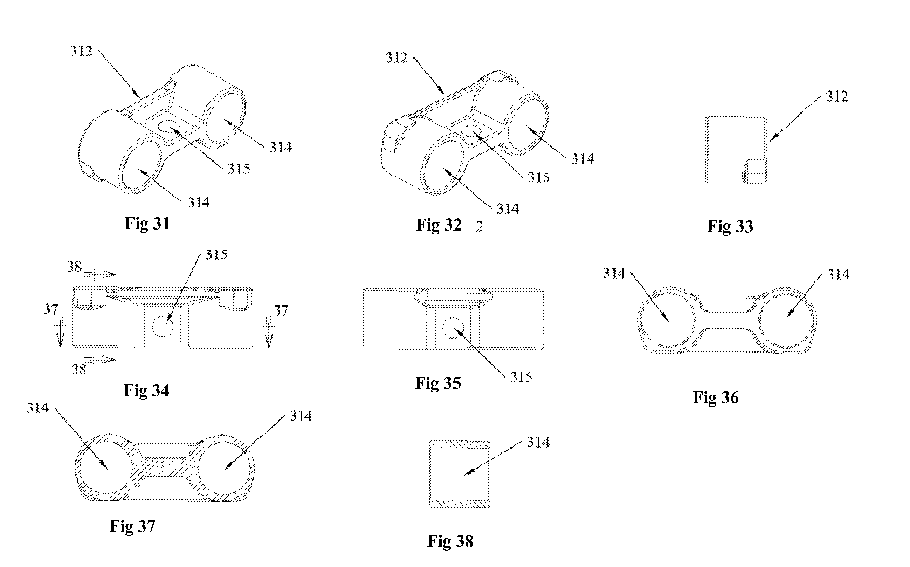

Referring to figures 31-38, the end member 31 with steel frame 312 has two through holes 314 to receive the end of the steel tube 293. A hole 315 is provided to allow the fixing screw 454 of the rubber pad 40 to pass through.

Referring to figures 39-44, the rubber pad 40 comprises of the pad surface 401, rubber projections 403, formed steel plate 45 and bolts 454. The pad surface 401 has a rectangular shape having recesses 404 at the central region of the rubber pad. The recess 404 also acts as a service life indicator of the rubber pad i.e. if the thickness of the rubber pad reduces up to its limit, the rubber pad has to be replaced. The rubber projection 403 has a square shape with the size corresponds to the size of the rubber socket 172. The rubber projections 403 act as fixers for the rubber pad 40 to the formed steel plate 45 if the adhesion between the rubber pad and the formed steel plate is fail.

Figure 45-50 show the formed steel plate. The formed steel plate is a rectangular steel plate which is pressed to have arch shape 451 that matches with the curvature of the curve 171 of the track shoe body. The recesses 452 are provided to give additional strength for the formed steel plate. At the ends of the formed steel plate, two fixing screws 454 are fixed. Holes 511 are also provided to allow the rubber projection 403 to be inserted from the back of the formed steel plate.

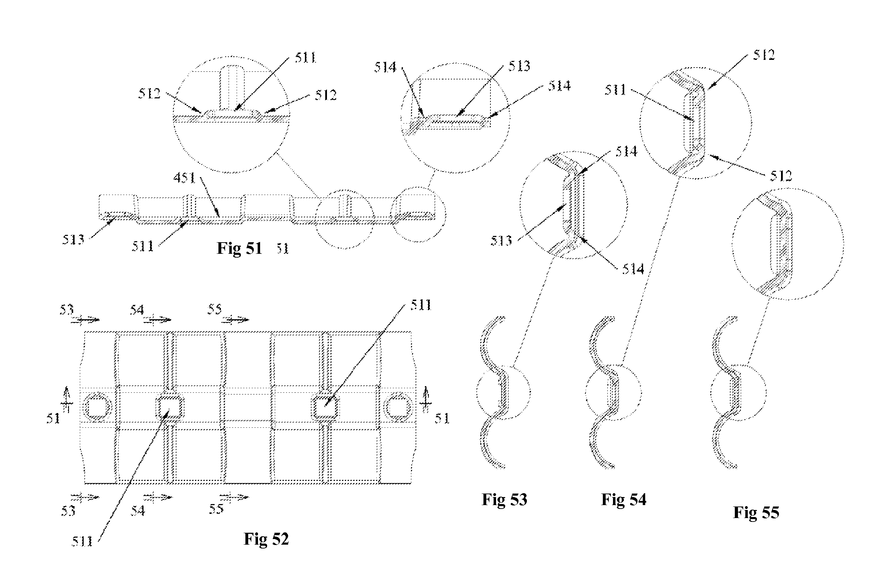

Figures 51-55 show the sectional view of the formed steel plate of figure 45. The square through holes 511 are formed by punching the steel plate to become recesses 512 in the direction oppose to the inserting direction of the rubber projection 403. The screw holes 513 are also formed by punching the steel plate to become recesses 514 in order to provide additional strength for the steel plate and for the permanent fixing of the square head screws 454.

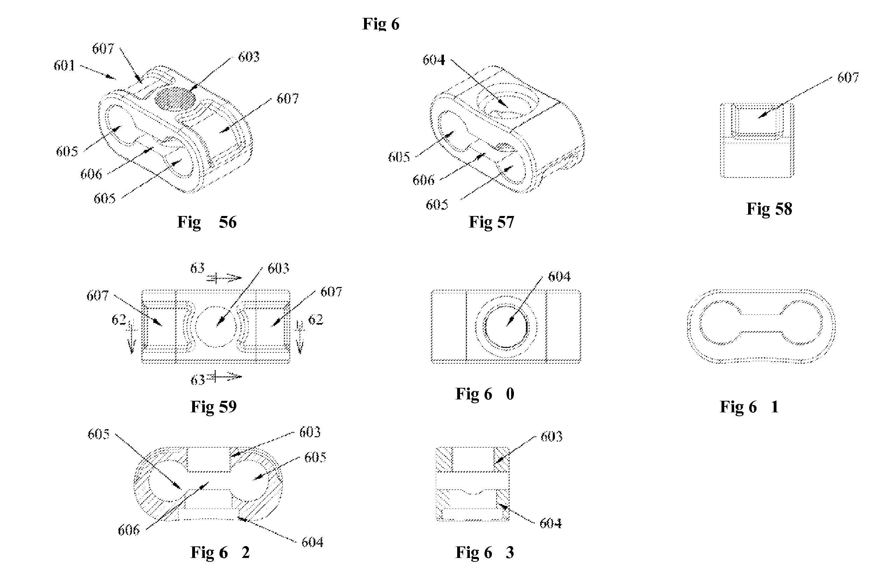

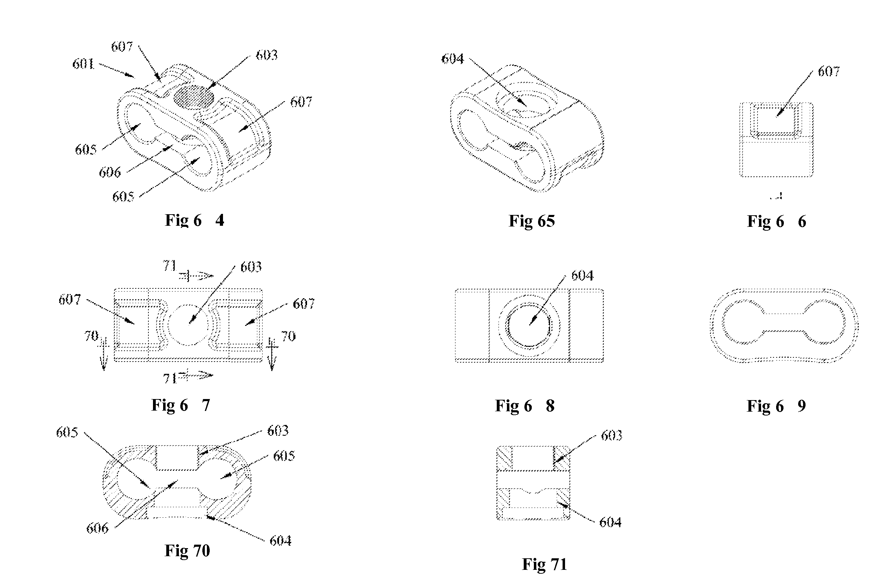

Figures 56-71 show the left and right hand sides of the end connector 60 having round edges. Two circular holes 605 are drilled having the inside diameter fit to the outside diameter of the pin 152. A slot 606 is drilled to join both holes 605 together. The top surfaces of the round edges 607 is depressed to create a backbone 601 that increases the strength and decreases thickness of the steel on both end of the end connector. Such design of the end connector makes the end connector depressed when the bolt 154 is tightened. The wall of the end connector 60 will be depressed and tightly grips the pins 152. A bolt is inserted through the hole 604 and catches with the thread and the semicircular recess 156 at the end of both pins 152. The end of the bolt also projects to the hole of the end connector at the region 603. The region 603 has a thread that can receive the bolt 154 while the bolt 154 grips the end connector and the pin together. The bolt also prevents the dislodging of the end connector from the pins 152.

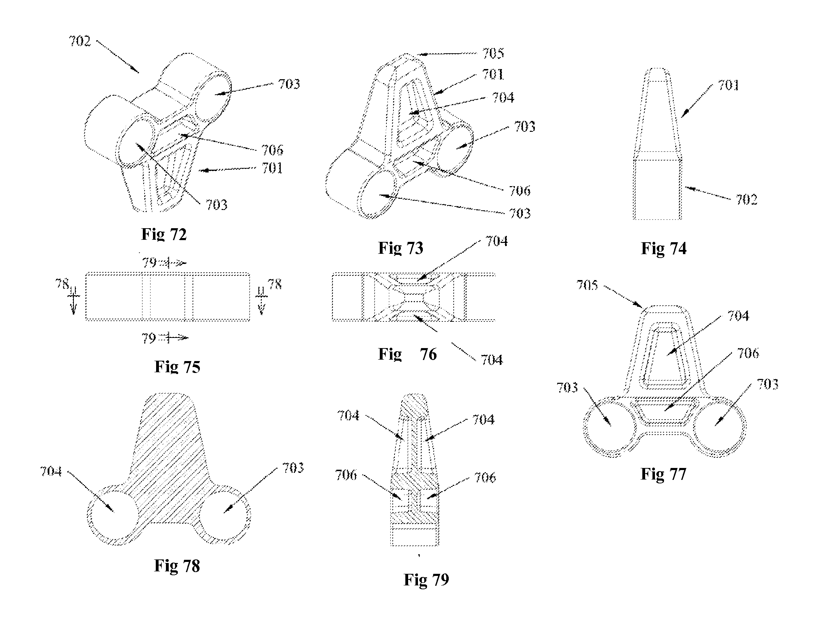

Figures 72-79 show the extension guided chassis 70 which can be divided into two sections i.e. the guide member 701 and the steel body 702. The guide member 701 has pyramid shape with two recesses 704 on both surfaces to reduce friction between the guide member and the wall of the road wheel. The slot 704 is also provided to reduce the weight of the guide member. The steel body 702 has two holes 703 to allow the steel tubes 29 to pass through to the centre of the track shoe assembly

## Claims

1. A track shoe assembly for a medium tracked vehicle. The said track shoe assembly for the medium tracked vehicle comprised of track shoe body (17), rubber pad (40), end connector (60), and pins with rubber bushing (152). The said track shoe body (17) is made from steel frame and rubberized. A guide member (70) project beyond the rubber pad covering the track shoe body (17). The pin with rubber bushing (152) is inserted through the hole of the track shoe body (17) and fixed to the adjacent track shoe body (17) with the end connector (60). The end connector (60) is sleeved on both ends of both pin (152) and fixed in place with screw (154) that is inserted through the hole provided at the centre of the end connector (60). The hole at the centre of the end connector (60) is threaded to engage with the pins (152) that are recessed to prevents the end connector (152) from dislodging from the pins (152).
The present track shoe assembly for medium tracked vehicle is driven by a sprocket wheel (9) which drives the track shoe assembly at the end connector (60). Each component of the present track shoe assembly is separately manufactured, thus only the wear out part has to be replaced.
The track shoe assembly of the present invention has the following characters :
- The track shoe body before rubberization comprises of two steel tubes (29) and extension guided chassis (70). The said two steel tubes (29) lay parallel to each other. End member having steel grouser (31) are sleeved on the left and the right ends of both two steel tubes (29).
The extension guided chassis (70) is divided into two sections. The steel body (702), the first part, is a solid body having two holes (703) to allow the steel tubes to be inserted pass through the entire length of the track shoe body. The second part, the guide member (701) has a pyramid shape (705) with the base thicker than the apex. There are two recesses (704) on both side of the guide member to reduce friction between the guide member and the wall of the road wheel and to reduce the load of the engine.
The end member (31) is a solid steel body having two holes (314) for the steel tubes (29) to be inserted pass through the entire length of the track shoe body. Hole (315) is provided to allow the fixing bolt (454) of the rubber pad (40) to pass through and engages with a nut.

2. The track shoe assembly for medium tracked vehicle of claim 1, wherein the formed steel plate (45) is formed to have double arches (451) and recesses (452) to give additional strength for the formed steel plate. The curvature of the arches (451) can fit with the curve (171) of the track shoe body. Each rim of the formed steel plate is provided with a hole for the permanent fixing of the fixing bolt (454) to allow the nut (155) fasten to the fixing bolt. Two holes (511) are also provided in the central region of the formed steel plate (45) to allow the rubber to flow through during rubberization and form square projections (403) on the other side of the formed steel plate. The rubber projections (403) act as fixers for the rubber pad to the formed steel plate if the adhesion between the rubber pad and the formed steel plate is failure.

3. The track shoe assembly for medium tracked vehicle of claim 1, wherein the rubber pad (40) has a dumbbell shape (401) having two recesses (404) locate on both rim at the centreline along the width of the rubber pad. The dumbbell pattern provides better tracking and also acts as service life indicator of the rubber pad. The width at all four corners of the rubber pad is reduced in order to fit the space of the track shoe body.

4. The track shoe assembly for medium tracked vehicle of claim 1, wherein the end connector 60 is drilled to have two circular holes. The hole 605 has the inside diameter exactly fits to the outside diameter of the pin 152. A slot 606 is milled to join both holes 605 together. The top surfaces 607 is depressed to create a backbone 601 that increases the strength and decreases thickness of the steel on both end of the end connector which makes the end connector depressed when the bolt 154 is tightened. The wall of the end connector 60 will be depressed and tightly grips the pins 152. A bolt is inserted through the hole 604 and catches with the thread and the semicircular recess 156 at the end of both pins 152. The end of the bolt also projects to the hole of the end connector at the region 603. The region 603 has a thread that can receive the bolt 154 while the bolt 154 grips the end connector and the pin together. The bolt also prevents the dislodging of the end connector from the pins 152.
